Europäisches Patentamt

European Patent Office

Office européen des brevets

(19)

(11) Veröffentlichungsnummer: **0 035 101**
**B1**

(12)
# EUROPÄISCHE PATENTSCHRIFT

(45) Veröffentlichungstag der Patentschrift: **24.04.85**

(21) Anmeldenummer: **81100264.1**

(22) Anmeldetag: **15.01.81**

(51) Int. Cl.⁴: **G 01 S 3/78, G 01 S 17/87**

(54) **Verfahren und Vorrichtung zur Detektion und Verfolgung von Luft- und Bodenzielen.**

(30) Priorität: **01.03.80 DE 3007893**

(43) Veröffentlichungstag der Anmeldung:
**09.09.81 Patentblatt 81/36**

(45) Bekanntmachung des Hinweises auf die
Patenterteilung:
**24.04.85 Patentblatt 85/17**

(84) Benannte Vertragsstaaten:
**FR GB IT NL SE**

(56) Entgegenhaltungen:
**EP-A-0 012 060**
**DE-A-1 772 645**
**DE-A-2 021 816**
**DE-A-2 655 520**
**DE-A-2 714 178**
**US-A-3 023 661**
**US-A-3 087 373**
**US-A-3 698 812**
**US-A-4 084 881**

**Die Akte enthält technische Angaben, die nach
dem Eingang der Anmeldung eingereicht
wurden und die nicht in dieser Patentschrift
enthalten sind.**

(73) Patentinhaber: **ELTRO GmbH Gesellschaft für
Strahlungstechnik
Kurpfalzring 106 Postfach 10 21 20
D-6900 Heidelberg 1 (DE)**

(72) Erfinder: **Klink, Paul
Scheffelweg 4
D-6901 Wiesenbach (DE)**

(74) Vertreter: **Muschka, Wilhelm, Dipl.-Ing.
Eltro GmbH Gesellschaft für Strahlungstechnik
Kurpfalzring 106 Postfach 10 21 20
D-6900 Heidelberg 1 (DE)**

Courier Press, Leamington Spa, England.

## Beschreibung

Die Erfindung bezieht sich auf ein Verfahren und eine Vorrichtung zur Detektion und Verfolgung von Luft- und Bodenzielen unter Zuhilfenahme eines Wärmebildgerätes, bei dem der IR-Strahlungsanteil einer Szene mittels eines ersten beweglichen Spiegels abgetastet und über ein IR-Eingangsobjektiv sowie einen in der optischen Achse dieses Spiegels angeordneten beweglichen zweiten Spiegel auf eine Detektorreihe gelenkt wird, die senkrecht im Bildfeld steht, wobei die Detektoren die IR-Signale in Spannungssignale umwandeln, die verstärkt und über eine Bildwiedergabe sichtbar gemacht werden.

Eine solche Vorrichtung ist Gegenstand der DE—A—17 72 645. Diese ansonsten durchaus brauchbare Vorrichtung setzt sich aus den drei getrennten Einheiten Tagsicht-, Nachtsicht- und Wärmebildgerät zusammen. Sowohl die Verwendung mehrerer solcher Geräte als auch die hierbei erforderliche Harmonisierung der zugehörigen Visierlinien ist relativ aufwendig. Darüberhinaus ist die Kombination Tagsicht-Restlichtcerstärker-Wärmebild- bzw. Wärmeorter durch die hoch auflosenden Wärmebildgeräte technisch überholt.

Aus der DE—A—20 21 816 ist ferner die Überlagerung der Schwingbewegungen eines Azimut- und eines Elevationsspiegels bekannt. Hierbei oszilliert der eine Spiegel fortlaufend. Sein Abtastwinkel wird während der Suchphase eines Ziels groß und während der Verfolgungsphase sehr viel kleiner gehalten. Als Referenz für die Lage des gleichfalls bewegbaren anderen Spiegels dient die Beaufschlagung eines entsprechenden Detektors. Ein Zurücksteuern auf die genaue Lage kann hier nur über ein festes Ziel (aus dem Unendlichen) erfolgen, obgleich bei einem Suchvorgang die Position des Zieles meist ständigen Änderungen unterliegt.

Die Aufgabe der Erfindung wird darin gesehen, bei dem gattungsgemäßen Verfahren mit einem geringeren Geräteaufwand ein größeres Sehfeld zu erfassen. Diese Aufgabe wird erfindungsgemäß dadurch gelöst, daß für die Detektion ein großes Sehfeld eingeschaltet, der erste Spiegel um eine vertikale Achse in Rotation versetzt wird, und ein Bildaufrichtesystem verwendet wird, derart, daß eine Abtastung in horizontaler Ebene erfolgt, der Zweite Spiegel währenddessen in Ruhestellung gehalten und bei dieser Betriebsart als Umlenkspiegel benützt wird, daß nach der Zielerfassung—durch den Bediener oder über eine automatische Zielauswertung—der erste Spiegel angehalten und das Objektiv für den Identifizierungsvorgang auf ein kleines Sehfeld umgeschaltet wird und unter Verwendung des Bildaufrichtesystems mit dem zweiten Spiegel die Detektorreihe in horizontaler Bildrichtung um den Bildwinkel des kleinen Sehfeldes überstrichen wird.

Damit feindliche Hubschrauber besser von eigenen unterschieden werden können, ist es von Vorteil, daß beim Identifizierungsvorgang, bei dem das Ziel in der Achse nachgeführt wird, nach der Vorverstärkung des Signals mit Hilfe elektrischer Filter eventuell vorhandene Rotorschwingungen von Hubschraubern selektiert und zur Typenanalyse verwendet werden (vgl. DE—A—26 55 520).

Um bei jeder beliebigen festen Stellung des ersten Spiegels eine horizontale Abtastung des Detektors zu erreichen, wird das Bild im IR-Teil über ein Bildaufrichtesystem aufgerichtet. Mit anderen Worten: Durch das Bildaufrichtesystem, das z.B. ein Dachkantprisma sein kann, werden die jeweils unterschiedlichen Stellungen der beiden optischen Spiegel ausgeglichen bzw. ihre Bewegungen können voneinander unabhängig erfolgen.

Um von einem georteten Ziel festzustellen, inwieweit es dem Beobachter gefährlich werden und gegebenenfalls zum Abschuß freigegeben werden könnte, ist es vorteilhaft, daß zur zusätzlichen Entfernungsmessung ein hinsichtlich der optischen Achsen mit dem Wärmebildgerät harmonisiertes, nach dem Impulslaufzeitverfahren arbeitendes Laserentfernungsmeßgerät zur Messung der Zielentfernung vorgesehen ist.

In diesem Zusammenhang ist es einmal sinnvoll, daß als Empfänger für das Laserentfernungsmeßgerät ein von der Detektorreihe des Wärmebildgerätes getrennter und mit einem Breitbandverstärker ausgerüsteter weiterer Detektor dient. Zum anderen kann es sinnvoll sein, daß die von einer separat angeordneten Lasersendereinheit abgegebenen Impulse direkt oder über den vergrößerten ersten Spiegel und ein Teil der vom Ziel reflektierten Anteile über denselben Spiegel geführt sind/ist. Um zu erreichen, daß der Laserimpuls zu einem definierten Zeitpunkt und damit bei einer bestimmten Stellung des Abtastspiegels herausgeht, ist die Synchronisation zwischen Laserimpuls und Spiegel erforderlich. Der Laserdetektor, der im gleichen Dewar untergebracht sein kann, muß so groß sein, daß der rückgestreute Impuls beim Weiterbewegen des Spiegels immer noch auf den Detektor fällt.

Wegen der wesentlich geringeren Gefährlichkeit des Gaslasers bietet sich dabei an, daß der Laser ein $CO_2$-Laser ist und ein vorgeschaltetes Spektralfilter von dem reflektierten Anteil nur die im Bereich von 10,6 µm Wellenlänge liegende Strahlung für den Empfang durch den Entfernungsmessungsdetektor herausfiltert.

Da dieses Verfahren in der Regel aus gedeckter Sicht, z.B. aus dem Panzerinneren, über einen periskopischen Aufbau zum Einsatz gelangt, ist es in einem solchen Fall für die Orientierung erforderlich, daß ein Radarschirm vorgesehen ist, auf dem das von dem in horizontaler Ebene stillgesetzten zweiten Spiegel vorhandene Bild für die Bedienperson dargestellt und die Richtung des in diesem Bild vorhandenen Zieles mit Hilfe eines auf den Schirm umlaufenden, elektronisch an die Stellung des ersten Spiegels gekoppelten Zeigers angezeigt ist. Für die Identifizierung kann aus diesem Bild zusätzlich ein Sektor dargestellt werden.

Die Verbindung von Detektions- und Identifizierungsvorgang in einem Gerät in dieser Form hat den Vorteil, daß nur ein Gerät stabilisiert zu werden braucht, die Einweisung des Identifizierungssensors vom Detektionssensor schneller ist und keine Schleifringverbindung von außerhalb des Panzers zum Kampfraum erforderlich ist.

In diesem Zusammenhang kommt auch der Ausbildung des Detektors besondere Bedeutung zu, der, in einem sogenannten IR-Hot-Spot-Sensor eingebaut, die Aufheizung der Rotorblätter durch die Umdrehungsgeschwindigkeit erkennen und daher in seinem Mittelbereich mit einer höheren geometrischen Auflösung versehen bzw. feinfühliger als in Außenbezirken gegliedert sein sollte. Es ist deshalb von Vorteil, wenn die Detektorreihe in ihrem Mittelbereich als einen Mehrfachzeilensprung aufweisende Detektorzeile ausgebildet ist.

Was die konstruktive Ausbildung der verwendeten Vorrichtung anbetrifft, sehen weitere Merkmale der Erfindung vor, daß das Eingangsobjektiv ein wellenlängenunabhängiges Spiegelobjektiv ist und der sich—im Verlauf des Strahlengangs—anschließende zweite Spiegel die Strahlung unter 45° über ein Detektorabbildungsobjektiv, einen in dessen Bildebene rotierenden und im Bereich der Rotorfrequenzen von Hubschraubern durchstimmbar laufenden Modulator sowie einen Immersionskörper auf der Detektorreihe abbildet. Durch die Art der Modulation wird erreicht, daß feststehende Punktziele von pulsierenden unterschieden werden. Hierbei ist es zweckmäßig, daß die Rundumstrahlung im 8- bis 12-μm-Bereich in einem Elevationsband von z.B. 10 bis 15° liegt und der Modulator als Schlitzscheibe oder logarithmische Spirale ausgebildet ist, während sich die Detektorreihe aus konzentrischen Ringen zusammensetzt, die abstandslos aneinandergrenzen und zusätzlich dergestalt sektorförmig unterteilt sind, daß die entstehenden Teilflächen insgesamt in der alternierenden Gliederung eines Schachbrettes aufgeteilt sind (vgl. US—A—3 023 661).

Eine andere Moglichkeit für die Deketorreihe sieht vor, daß sie sich aus quadratisch verlaufenden, konzentrisch angeordneten und abstandslos aneinandergrenzenden Streifen zusammensetzt, von denen jeder in etwa gleichgroße Flächen unterteilt ist und die Felder eines Streifens zueinander parallel und im Vergleich mit denjenigen des angrenzenden Streifens in Gegenrichtung verlaufend ausgebildet sind.

Im folgenden werden an Hand einer Zeichnung Ausführungsbeispiele der Erfindung näher erläutert, wobei die in den einzelnen Figuren einander entsprechende Teile dieselben Bezugszahlen aufweisen. Es zeigt

Fig. 1 das Funktionsschema eines Wärmebilgerätes.

Fig. 2 das Funktionsschema eines als Rundumdetektions- und Identifizierungsgerät ausgebildeten Wärmebildgerätes,

Fig. 3 eine mögliche Detektoranordnung eines Hot-Spot-Sensors,

Fig. 4 eine erfindungsgemäße Geräteanordnung,

Fig. 5a eine runde Detektoranordnung mit Schlitzscheibe als Modulator,

Fig. 5b eine quadratische Detektoranordnung und

Fig. 6 einen spiralförmigen Modulator.

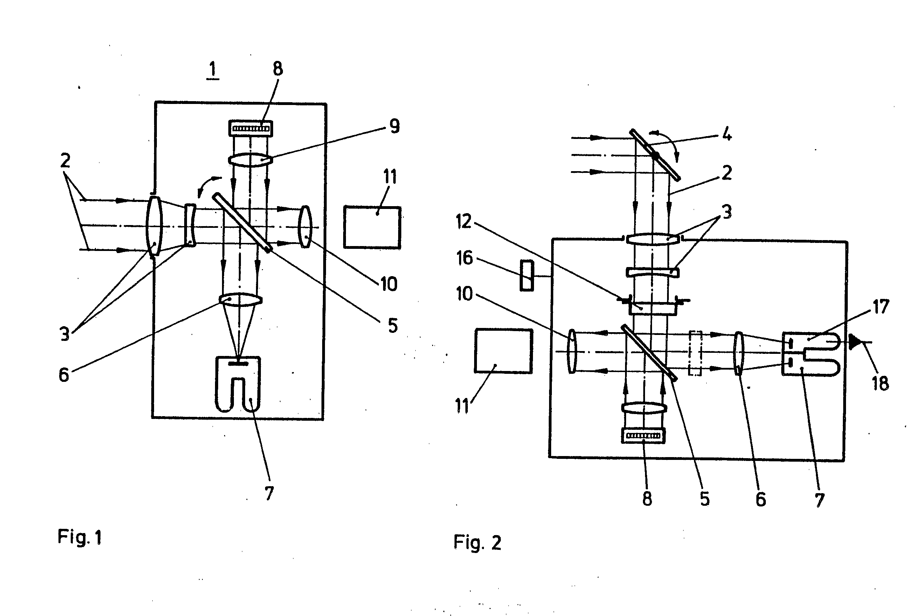

Bei der Fig. 1 ist das Funktionsschema eines herkömmlichen Wärmebildgerätes nach dem optischen Multiplexverfahren dargestellt. Die einfallende IR-Strahlung einer beliebigen Szene wird durch das IR-Eingangsobjektiv 3 afokal vom Abtastspiegel 5 umgelenkt, in horizontaler Richtung abgetastet und über das Abbildungsobjektiv 6 auf dem Detektor 7 abgebildet. Die Sichtbarmachung dieser Strahlung geschieht über lichtemitierende Dioden 8, die von den Detektorsignalen über Verstärker angesteuert werden. Die Linsen 9 und 10 deuten die Wiedergabeoptik an.

Für die Umsetzung dieses Bildes auf einen Monitor kann eine Fernsehkamera 11 vorgesehen werden.

In Figur 2 ist schematisch das Zusammenwirken eines weitere Spiegels 4 mit dem Spiegel 5 dargestellt. Das Spiegelbild-Aufrichtesystem 12, das zwischen Objektiv 3 und Spiegel 5 oder zwischen diesem und dem Objektiv 6 angeordnet sein kann, gleicht die jeweils unterschiedlichen Stellungen der beiden Spiegel optisch so aus, daß die Detektorzeile immer vertikal im Bildfeld steht. Das Gerät besitzt zwei Sehfelder unterschiedlicher Größe. Für den Detektionsvorgang ist das große Sehfeld eingeschaltet. Der Spiegel 4 wird in Rotationsbewegung versetzt (Der Doppelpfeil deutet dies an, ohne unbedingt die wahre Schwenkrichtung wiederzugeben.). Der Spiegel 5 dient lediglich zur Umlenkung der IR-Strahlung.

Sobald der Beobachter oder eine automatische Bild-Auswertung ein interessantes Ziel ausgemacht hat, wird der erste Spiegel 4 angehalten. Gleichzeitig wird der zweite Spiegel 5 in Schwingung versetzt und optisch das kleine Sehfeld eingeschaltet. Das Gerät arbeitet jetzt als reines Wärmebildgerät, wobei der erste Spiegel 4 nur noch als Umlenkspiegel dient.

Die Detektoranordnung kann dergestalt ausgebildet sein, daß z.B. 360 Elemente nebeneinander angeordnet sind, die für den Identifizierungsvorgang dadurch auf 180 Elemente umgeschaltet werden können, daß der zweite Spiegel 5 neben seiner Bewegung in Abtastrichtung (horizontal) eine zweite Bewegung als Zwischenzeilenfunktion beschreibt.

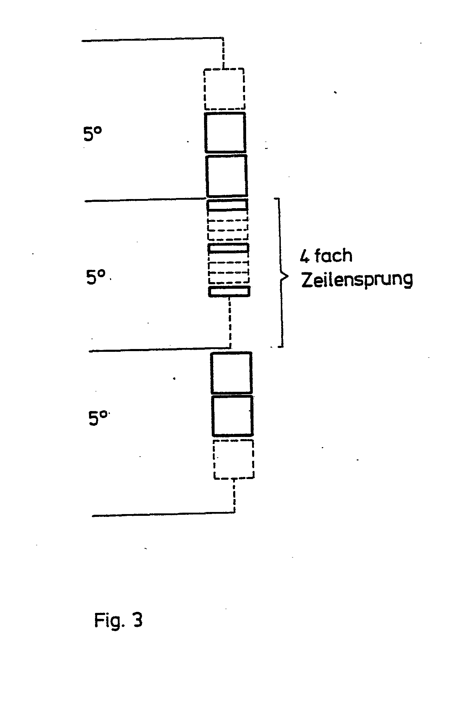

Fig. 3 zeigt die Detektoranordnung eines Hot-Spot-Sensors, der im mittleren Bereich eine so hohe geometrische Auflösung hat, daß die Rotorblätter von Hubschraubern aufgelöst werden können.

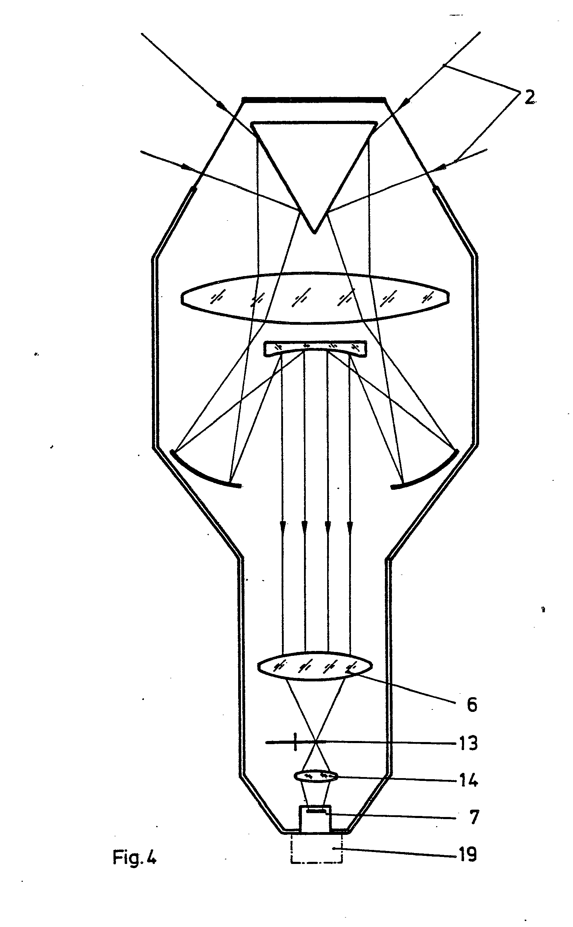

Fig. 4 zeigt den Geräteaufbau. Die Erfindung geht von der Annahme aus, daß ein Hubschrauber auf große Entfernung ein Punktziel darstellt, bei dem die Information von den Rotorblättern im Rhythmus der Rotorfrequenz anfällt. Durch die Schlitzscheibe 13 als Modulator, die in der Bildebene variabel rotiert, werden Flächenziele und Hintergrundstrahlung unterdrückt. Wird die Drehzahl direkt mit dem Signal des Detektors 7 gekoppelt, ergibt sich bei der Rotorfrequenz zwangsläufig ein Maximum an Strahlung (Prinzip der Lichtgeschwindigkeitsmessung). Alle festen Punktziele können dadurch ausgefiltert werden, daß sie nur mit der konstanten Modulatorfrequenz moduliert werden.

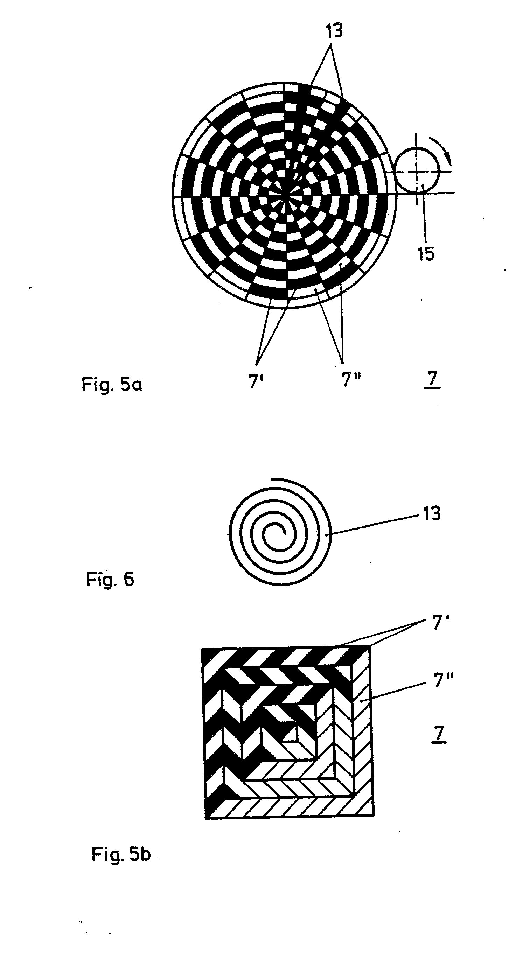

Wie Fig. 5 zeigt, kann die Struktur der Detektorreihe 7 aus konzentrischen Ringen bestehen, die abstandslos aneinandergrenzen und insgesamt eine Kreisfläche darstellen. Dieselbe ist zusätzlich sektorförmig unterteilt. Die auf diese Weise entstehenden Felder 7' und 7'' können abwechselnd mit Informationen versehen sein, was durch die schwarzen Felder 7' symbolisiert ist. Mit 13 ist der in diesem Fall als Schlitzscheibe ausgebildete Modulator und mit 15 ihr Antrieb angedeutet. Die Schlitzscheibe variiert in ihrer Drehzahl solange, bis auf die Detektorreihe eine maximale Strahlungsleistung fällt. Über die Detektorspannung wird die Drehzahl dann konstant gehalten. Bei einem anderen Ausführungsbeispiel kann die Modulation elektrisch oder mit einem z.B. laut Fig. 6 in Form einer logarithmischen Spirale ausgebildeten Modulator erfolgen. Aber auch die geometrische Struktur der Detektorreihe 7 kann anders ausgebildet sein, ohne daß dadurch der Rahmen der Erfindung verlassen wird. So zeigt z.B. Fig. 5b eine Detektorreihe quadratischer Formgebung. Die Ringe der Fig. 5a sind hier zu—aus einzelnen Streifen zusammen-gesetzten—Vierecken "deformiert". Ihre ein-zelnen Felder 7' und 7'' verlaufen zueinander parallel, jedoch von Streifen zu Streifen jeweils in Gegenrichtung. Detektorzeile entsprechend Fig. 3 muß in ihrem Mittelbereich für einen Mehrfachzeilensprung feiner untergliedert sein. Im vorliegenden Ausführungsbeispiel überwachen z.B. jeweils drei Detektorelemente einen Winkelbereich von 5° im Azimut.

Für den Fall, daß das vorstehend beschriebene Rundum-Beobachtungsgerät zu einem Waffensystem ausgebaut wird, muß sein Wärmebildgerät 1 (s. Fig. 1) mit einem Laserentfernungsmeßgerät 16, 17 (s. Fig. 2) dergestalt kombiniert werden, daß die optischen Achsen aufeinander abgestimmt sind. Dies erreicht man z.B. durch eine starre Verbindung zwischen Wärmebildgerät und Laserentfernungsmesser. Hierbei empfiehlt es sich, die Lasersendereinheit 16 an der Außenseite des Wärmebildgerätes, z.B. über eine Schwalbenschwanzführung, anzuflanschen. Sofern ein Laser von 1,06 µm Wellen-länge verwendet wird, strahlt der Sender direkt auf das Ziel ab, weil das Wärmebildgerät in einem anderen Wellenlängenbereich (10,6 µm) arbeitet, das dann von dem reflektierten Anteil nur den in seinem Wellenlängenbereich liegenden Teil zur Weiterverarbeitung herausfiltert. Wird dagegen ein Laser im Wellenlängenbereich von 8 bis 12 µm gewählt, kann über denselben Spiegel 4 abgestrahlt und empfangen werden. Für die Entfernungsinformation kann derselbe Detektor 7 beim Beobachtungsvorgang verwendet werden. Es kann aber auch eine nur dem Lasersender 16 zugeordnete getrennte Empfängereinheit 17 Verwendung finden, der ein Breitbandverstärker 18 nachgeschaltet ist.

Die Entfernungsangabe ist für eine Gefähr-dungsanalyse, beispielsweise durch einen Hub-schrauber, erforderlich: Da verschiedene Hub-schraubertypen vor allem ganz spezifische und hochkonstante Rotordrehzahlen aufweisen, kann nach dem Verstärkungsvorgang eines empfangenen Signals mit Hilfe elektrischer Filter eine eventuell in diesem Signal enthaltene Triebwerks-und/oder Rotor-schwingung selektiert werden, um eine Freund/Feind-Kennung durchzuführen. Für den Fall, daß hierbei auf "Feind" erkannt wird und eine funktionelle Verbindung zur eigentlichen Schußwaffe besteht, wird dieselbe automatisch in die entsprechende Richtung ausgerichtet und abgefeuert.

Wenn sich die Bedienungsperson in gedeckter Stellung befindet, wird das von dem Spiegel 4 wiedergegebene, im IR-Bereich aufgerichtete Bild auf einem für sich bekannten und nicht gezeichneten Radarschirm dargestellt. Die Positionierung des Spiegels 4 bzw. des auf ihm festgehaltenen Bildes wird mit Hilfe eines auf dem nach-leuchtenden Schirm umlaufenden Zeigers ange-zeigt.

**Patentansprüche**

1. Verfahren zur Detektion und Verfolgung von Luft- und Bodenzielen unter Zuhilfenahme eines Wärmebildgerätes (1), bei dem der IR-Strahlungsanteil einer Szene mittels eines ersten beweglichen Spiegels (4) abgetastet und über ein IR-Eingangsobjektiv (3) sowie einen in der optischen Achse dieses Spiegels angeordneten beweglichen zweiten Spiegel (5) auf eine Detektorreihe (7) gelenkt wird, die senkrecht im Bildfeld steht, wobei die Detektoren die IR-Signale in Spannungssignale umwandeln, die verstärkt und über eine Bildwiedergabe sichtbar gemacht werden, dadurch gekennzeichnet, daß für die Detektion ein großes Sehfeld eingeschaltet, der erste Spiegel (4) um eine vertikale Achse in Rotation versetzt wird und ein Bildaufrichtesystem (12) verwendet wird, derart, daß eine Abtastung in horizontaler Ebene erfolgt, der zweite Spiegel (5) währenddessen in Ruhestellung gehalten und bei dieser Betriebsart als Umlenkspiegel benützt wird, daß nach der Zielerfassung—durch den Bediener oder über eine automatische Zielauswertung—der erste Spiegel angehalten und das Objektiv (3) für den Identifizierungsvorgang auf ein kleines Sehfeld umgeschaltet wird und unter Verwendung des Bildaufrichtesystems mit dem zweiten Spiegel die Detektorreihe (7) in horizontaler Bildrichtung um den Bildwinkel des kleinen Sehfeldes überstrichen wird.

2. Verfahren nach Anspruch 1, dadurch gekennzeichnet, daß beim Identifizierungsvorgang, bei dem das Ziel in der Achse nachgeführt wird, nach der Vorverstärkung des Signals mit Hilfe elektrischer Filter eventuell vorhandene Rotorschwingungen von Hubschraubern selektiert und zur Typenanalyse verwendet werden.

3. Vorrichtung zur Durchführung des Verfahrens nach Anspruch 1 oder 2, dadurch gekennzeichnet, daß das Bildaufrichtesystem (12) zwischen dem Eingangsobjektiv (3) und dem Zweiten Spiegel (5) angeordnet ist.

4. Vorrichtung zur Durchführung des Verfahrens nach Anspruch 1 oder 2, dadurch gekennzeichnet, daß das Bildaufrichtesystem (12) zwischen dem zweiten Spiegel (5) und der Detektorreihe (7) angeordnet ist.

5. Vorrichtung nach Anspruch 3 oder 4, dadurch gekennzeichnet, daß zur zusätzlichen Entfernungsmessung ein hinsichtlich der optischen Achsen mit dem Wärmebildgerät (1) harmonisiertes, nach dem Impulslaufzeitverfahren arbeitendes Laserentfernungsmeßgerät (16, 17) zur Messung der Zielentfernung vorgesehen ist.

6. Vorrichtung nach Anspruch 5, dadurch gekennzeichnet, daß als Empfänger für das Laserentfernungsmeßgerät (16, 17) ein von der Detektorreihe (7) des Wärmebildgerätes (1) getrennter und mit einem Breitbandverstärker (18) ausgerüsteter weiterer Detektor (17) dient.

7. Vorrichtung nach Anspruch 6, dadurch gekennzeichnet, daß die von einer separat angeordneten Lasersendereinheit (16) abgegebenen Impulse direkt oder über den vergrößerten ersten Spiegel (4) und ein Teil der vom Ziel reflektierten Anteile über denselben Spiegel geführt sind/ist.

8. Vorrichtung nach Anspruch 7, dadurch gekennzeichnet, daß der Laser ein $CO_2$-Laser ist und ein vorgeschaltetes Spektralfilter von dem reflektierten Anteil nur die im Bereich von 10,6 µm Wellenlänge liegende Strahlung für den Empfang durch den Entfernungsmessungsdetektor (17) herausfiltert.

9. Vorrichtung nach einem der Ansprüche 3 bis 8, dadurch gekennzeichnet, daß ein Radarschirm vorgesehen ist, auf dem das von dem in horizontaler Ebene stillgesetzten zweiten Spiegel (5) vorhandene Bild für die Bedienungsperson dargestellt und die Richtung des in diesem Bild vorhandenen Zieles mit Hilfe eines auf dem Schirm umlaufenden, elektronisch an die Stellung des ersten Spiegels (4) gekoppelten Zeigers angezeigt ist.

10. Vorrichtung nach einem der Ansprüche 4 bis 9, dadurch gekennzeichnet, daß die Detektorreihe (7) beim Identifizierungssensor in ihrem Mittelbereich als einen Mehrfachzeilensprung aufweisende Detektorzeile ausgebildet ist (Fig. 3).

11. Vorrichtung nach einem der Ansprüche 4 bis 10, dadurch gekennzeichnet, daß das Eingangsobjektiv (3) ein wellenlängenunabhängiges Spiegelobjektiv ist und der sich—im Verlauf des Strahlengangs—anschließende zweite Spiegel (5) die Strahlung unter 45° über ein Detektorabbildungsobjektiv (6), einen in dessen Bildebene rotierenden und im Bereich der Rotorfrequenzen von Hubschraubern durchstimmbar laufenden Modulator (13) sowie einen Immersionskörper (14) auf der Detektorreihe (7) abbildet.

12. Vorrichtung nach Anspruch 11, dadurch gekennzeichnet, daß die Rundumstrahlung im 8-bis 12 µm-Bereich in einem Elevationsband von z.B. 10 bis 15° liegt und der Modulator (13) als Schlitzscheibe oder logarithmische Spirale ausgebildet ist (Fig. 5a und 6).

13. Vorrichtung nach Anspruch 11 oder 12, dadurch gekennzeichnet, daß sich die Detektorreihe (7) aus konzentrischen Ringen zusammensetzt, die abstandslos aneinandergrenzen und zusätzlich dergestalt sektorförmig unterteilt sind, daß die entstehenden Teilflächen (7'; 7'') insgesamt in der alternierenden Gliederung eines Schachbrettes aufgeteilt sind (Fig. 5a).

14. Vorrichtung nach Ansprüche 11 oder 12, dadurch gekennzeichnet, daß sich die Detektorreihe (7) aus quadratisch verlaufenden, konzentrisch angeordneten und abstandslos aneinandergrenzenden Streifen zusammensetzt, von denen jeder in etwa gleichgroße Flächen unterteilt ist und die Felder (7'; 7'') eines Streifens zueinander parallel und im Vergleich mit denjenigen des angrenzenden Streifens in Gegenrichtung verlaufend ausgebildet sind (Fig. 5b).

**Revendications**

1. Procédé de détection et de poursuite d'objectifs aériens et terrestres à l'aide d'un appareil à image thermique (1) pour lequel la partie de rayonnement infra-rouge d'une scène est explorée à l'aide d'un premier miroir mobile (4) pour être dirigée par un objectif d'entrée à infra-rouge (3) ainsi que par un deuxième miroir mobile (5) implanté dans l'axe optique de ce premier miroir vers une série de détecteurs (7) placée verticalement dans le champ de l'image, les détecteurs transformant les signaux infrarouges en signaux de tension qui sont amplifiés et rendus visibles par une reproduction d'images, caractérisé en ce que pour la détection un champ de vision important est utilisé, le premier miroir (4) est mis en rotation autour d'un axe vertical et un système de redressement d'image (12) est utilisé de telle sorte qu'il y a un balayage dans le plan horizontal, le deuxième miroir (5) étant pendant ce temps maintenu en position de repos et utilisé, dans ce mode de mise en oeuvre, comme miroir de renvoi, et en ce que, après l'acquisition de l'objectif—soit par l'opérateur, soit par un équipment automatique d'acquisition d'objectif—le premier miroir est arrêté et l'objectif (3) est commuté sur un champ de vision réduit pour le processus d'identification, le deuxième miroir balayant, en utilisant le système de redressement d'image, la série de détecteurs (7) en direction d'image horizontale de la valeur de l'angle d'image du champ de vision réduit.

2. Procédé selon la revendication 1, caractérisé en ce que, lors de l'opération d'identification lors de laquelle l'objectif est suivi dans l'axe, des oscillations de rotor d'hélicoptères éventuellement existantes sont sélectionnées après pré-amplification du signal à l'aide d'un filtre électrique pour être utilisées pour l'analyse de type.

3. Dispositif pour l'application du procédé selon la revendication 1 ou 2, caractérisé en ce que le système de redressement d'image (12) est implanté entre l'objectif d'entrée (3) et le deuxième miroir (5).

4. Dispositif pour l'application du procédé selon la revendication 1 ou 2, caractérisé en ce que le système de redressement d'image (12) est implanté entre le deuxième miroir (5) et la série de détecteurs (7).

5. Dispositif selon la revendication 3 ou 4, caractérisé en ce qu'un appareil de mesure d'éloignement à laser (16, 17) fonctionnant selon le procédé par temps de propagation d'impulsions harmonisé avec l'appareil à image thermique (1) en ce qui concerne les axes optiques, est prévu en tant que mesure d'éloignement supplémentaire pour la mesure de l'éloignement de l'objectif.

6. Dispositif selon la revendication 5, caractérisé en ce qu'un détecteur supplémentaire (17) sert de récepteur pour l'appareil de mesure d'éloignement à laser (16, 17), ce détecteur étant séparé de la série de détecteurs (7) de l'appareil à image thermique (1) et équipé d'un amplificateur à large bande (18).

7. Dispositif selon la revendication 6, caractérisé en ce que les impulsions émises par une unité d'émission laser (16) implantée séparément sont guidées directement ou par le premier miroir agrandi (4), une partie de la réflexion de l'objectif étant guidée par le même miroir.

8. Dispositif selon la revendication 7, caractérisé en ce que le laser est un laser à $CO_2$ et un filtre spectral placé en amont ne filtre que le rayonnement situé dans la gamme de longueur d'onde de 10,6 μm de la réflexion pour la réception par le détecteur de mesure d'éloignement (17).

9. Dispositif selon l'une des revendications 3 à 8, caractérisé en ce qu'il est prévu un écran radar sur lequel l'image du deuxième miroir (5) arrêté dans le plan horizontal est représenté epour l'opérateur, la direction de l'objectif existant sur cette image étant indiquée par un indicateur tournant sur l'écran et accouplé électroniquement à la position du premier miroir (4).

10. Dispositif selon l'une des revendications 4 à 9, caractérisé en ce que la série de détecteurs (7) présente auprès de la sonde d'identification dans sa région médiane une ligne de détecteurs présentant un saut de plusieurs lignes (Fig. 3).

11. Dispositif selon l'une des revendications 4 à 10, caractérisé en ce que l'objectif d'entrée (3) est un objectif à miroir indépendant des longueurs d'ondes et que le deuxième miroir (5)—placé sur le parcours du rayon—représente le rayonnement inférieur à 45° sur la série de détecteurs (7) par le biais d'un objectif de représentation de détecteur (6), d'un modulateur constant (13) réglable tournant dans le plan d'image de l'objectif de représentation de détecteur et réglable dans la gamme des fréquences de rotor d'hélicoptères, et d'un corps d'immersion (14).

12. Dispositif selon la revendication 11, caractérisé en ce que le rayonnement est placé dans une gamme de 8 à 12 μm dans une bande d'élévation de par exemple 10 à 15° et le modulateur (13) est formé en tant que disque à fente ou spirale logarithmique (Fig. 5a et 6).

13. Dispositif selon la revendication 11 ou 12, caractérisé en ce que la série de détecteurs (7) se compose de bagues concentriques mitoyennes qui sont en outre divisées en secteurs de sorte telle que les surfaces partielles ainsi formées (7', 7'') soient réparties en tout sous la forme de la composition alternée d'un échiquier (Fig. 5a).

14. Dispositif selon la revendication 11 ou 12, caractérisé en ce que la série de détecteurs (7) se compose de bandes carrées implantées concentriquement et mitoyennes les unes par rapport aux autres, chacune étant subdivisée en surfaces pratiquement égales et les champs (7', 7'') d'une bande étant parallèles les une aux autres et ayant un sens opposé à ceux de la bande directement suivante (Fig. 5b).

**Claims**

1. A method of detecting and tracking air and ground targets with the aid of a heat image instrument (1) wherein the infra-red portion of a scene is scanned by means of a first movable mirror (4) and is directed via an infra-red input objective (3) and a movable second mirror (5) disposed in the optical axis of this mirror, onto a series of detectors (7) disposed vertically in the image field; the detectors converting the infra-red signals into voltage signals which are amplified and made visible by image reproduction, characerised in that for detection a large field of vision is switched on, the first mirror (4) is caused to rotate about a vertical axis and an image erection system (12) is used so that scanning takes place in a horizontal plane, the second mirror (5) being in the meantime maintained in an inoperative position and, under these working conditions, being used as a deflecting mirror, and in that after the target has been picked up—by the operator or via an automatic target evaluating means—the first mirror is stopped and the objective (3) switched over to a small field of view for the identification process, and in that while the image erection system is being used, the second mirror sweeps over the series of detectors (7) in the horizontal direction of the image by the image angle of the small field of view.

2. A method according to claim 1, characterized in that during the identification process, in which the target is tracked in the axis, after the preamplification of the signal by means of electrical filters, any rotor oscillations of helicopters which may be present are selected and used for type analysis.

3. Apparatus for carrying out the method according to claim 1 or 2, characterised in that the image erection system (12) is disposed between the input objective (3) and the second mirror (5).

4. Apparatus for carrying out the method according to claim 1 or 2, characterised in that the image erection system (12) is disposed between the second mirror (5) and the series of detectors (7).

5. Apparatus according to claim 3 or 4, characterised in that for auxiliary range measurement, there is provided, harmonised in respect of optical axes with the heat image instrument (1) and operating according to the pulse time delay principle, a laser range measuring instrument (16, 17) for measuring the target range.

6. Apparatus according to claim 5, characterised in that a detector (17) is used as a receiver for the laser range measuring instrument (16, 17), which detector is separate from the series of detectors (7) in the heat image instrument (1) and is equipped with a broadband amplifier (18).

7. Apparatus according to claim 6, characterised in that the pulses delivered by a separately disposed laser transmission unit (16) are passed directly or via the enlarged first mirror (4) and a part of the portion reflected by the target is passed via the same mirror.

8. Apparatus according to claim 7, characterised in that the laser is a $CO_2$ laser and in that a preceding spectral filter filters out from the reflected portion only those rays which lie in the region of 10.6 µm wavelength, for reception by the range measuring detector (17).

9. Apparatus according to one of claims 3 to 8, characterised in that a radar screen is provided on which there is depicted for the operator the image provided by the second mirror (5) which is held still in the horizontal plane, the direction of the target present in this image being indicated by means of a pointer rotating on the screen and electronically coupled to the position of the first mirror (4).

10. Apparatus according to one of claims 4 to 9, characterised in that the series of detectors (7), in the case of the identifying sensor, is constructed in its middle zone as a line of detectors having a multiline interlace (Figure 3).

11. Apparatus according to one of claims 4 to 10, characterised in that the input objective (3) is a wavelength independent mirror objective, and in that the—in the direction of the rays—second mirror (5) depicts the rays on the series of detectors (7) at an angle of 45° via a detector display objective (6), a modulator (13) rotating in the image plane thereof and being continuously variable in the range of rotor frequencies of helicopters and an immersion member (14).

12. Apparatus according to claim 1, characterised in that the all-round radiation lies in the 8 to 12 µm range, in an elevation band of, for instance, 10° to 15°, and in that the modulator (13) is constructed as a slotted disc or logarithmic spiral (Figures 5a and 6).

13. Apparatus according to claim 11 or 12, characterised in that the series of detectors (7) is composed of concentric rings which are adjacent one another without a gap between them and which are additionally so segmentally subdivided that the partial surfaces (7', 7'') which result are collectively sub-divided in an alternating chess board pattern (Figure 5a).

14. Apparatus according to claim 11 or 12, characterised in that the series of detectors (7) is composed of quadratically extending concentrically disposed strips which are adjacent one another with no gap between them, of which each is sub-divided into areas of approximately equal size, the zones (7', 7'') of a strip being parallel with one another and extending in the opposite direction in comparison with those of the adjacent strip (Figure 5b).

Fig. 2

Fig. 1

1

5°

5°

5°

4 fach
Zeilensprung

Fig. 3

Fig. 4

13

15

Fig. 5a

7'  7"  <u>7</u>

13

Fig. 6

7'

7"

<u>7</u>

Fig. 5b